# EUROPEAN PATENT SPECIFICATION

(11) **EP 1 835 203 B1**
(45) Date of publication and mention of the grant of the patent: **30.09.2009**
(21) Application number: 06005506.8
(22) Date of filing: 17.03.2006
(51) Int. Cl.: F16H 57/05, F16H 57/04

(54) **Cooling mechanism for belt-based speed-change system of engine**
Luftkühlung eines stufenloses Riemengetriebe auf der Motorseite
Refroidissement à air d'une transmission variable à courroie sur la poulie motrice

(43) Date of publication of application: 19.09.2007
(73) Proprietor: Kwang Yang Motor Co., Ltd., San-Min Dist., Kaohsiung City (TW)
(72) Inventor: Ho, Chao-Chang, c/o Alfred LEI, Cambridge CB21FD (GB)
(74) Representative: Horak, Michael

(56) References cited:
- US-A1- 2002 112 905
- US-A1- 2003 066 696
- US-A1- 2004 224 806
- PATENT ABSTRACTS OF JAPAN vol. 1999, no. 04, 30 April 1999 (1999-04-30) -& JP 11 011171 A (YAMAHA MOTOR CO LTD), 19 January 1999 (1999-01-19)

## Description

### BACKGROUND OF THE INVENTION

### (a) Technical Field of the Invention

The present invention relates to a cooling mechanism for belt-based speed-change system of engine, and in particular to a low temperature air flow guide structure for enhancing cooling performance for the belt-based speed-change system.

### (b) Description of the Prior Art

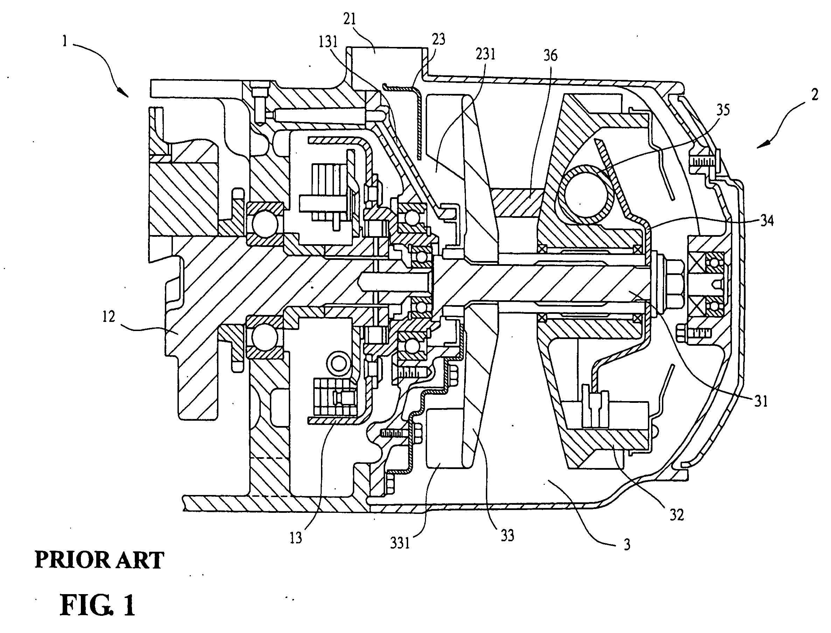

A motorcycle comprises an engine, which is shown in Figure 1 of the attached drawings, and is designated with reference numeral 1. The motorcycle also comprises a transmission box 2 that is arranged next to the engine 1 and that comprises a belt-based speed-change mechanism 3. The operation of the engine starts with drawing a mixture of fuel and air into the engine 1, followed by ignition to cause combustion of the fuel-air mixture. The combustion of fuel-air mixtures significantly increases the volume of gas inside the engine cylinder and induces a force driving the piston to move along the cylinder. The piston has a rod connected to a crankshaft 12, whereby the movement of the piston is converted into rotation of the crankshaft. An end of the crankshaft 12 is coupled to a wet-type clutch 13 and an opposite side of the clutch 13 is coupled to a shaft 31 the belt-based speed-change mechanism 3. The wet-type clutch 13 comprises a cover 131 that separates the clutch 13 from the belt-based speed-change mechanism 3. The belt-based speed-change mechanism 3 drives a rear wheel of the motorcycle, which in turns drives a front wheel to effect forward movement of the motorcycle.

A slide disk 32 is arranged on the shaft 31 of the belt-based speed-change mechanism 3. Also fixed on the shaft 31 but opposite to the slide disk 32 is a drive disk 33 with a variable space formed between the disks 32, 33 for accommodating a belt 36 interposed between the disks 32, 33. Thus, the belt 36 partially surrounds the shaft 31 but is radially spaced from the shaft 31 by a distance, which is variable. An opposite side of the belt 36 is coupled to a driven pulley (not shown), which is in turn coupled to a gear set for eventually driving the rear wheel.

A constraint board 34 is arranged opposite to the slide disk 32 to interpose a ball 35 therebetween. When the crankshaft 12 is driven by the operation of the engine, the rotation of the crankshaft 12 is transmitted to the slide disk 32 and the drive disk 33. When the motorcycle is accelerated, more fuel is drawn into the engine, which in turn increases the rotational speed of the crankshaft 12. The increased rotational speed induces a greater centrifugal force that moves the ball 35 radially outward. Due to the constraint induced by the constraint board 34, and also due to the geometry of the slide disk 32 and the constraint board 34, the outward movement of the ball 35 causes the slide disk 32 to axially slide along the shaft 31 and thus approach the drive disk 33. This reduces the space between the two disks 32, 33 and thus forces the belt 36 to move radially outward or expand. In other words, the distance between the belt 36 and the shaft 31 increases and the circumferential length around the shaft 31 that the belt 36 partially passes is increased. Consequently, the rotational speed of the driven pulley on the opposite side of the belt 36 is increased to drive the wheels to move faster and thereby effecting acceleration of the motorcycle.

However, the operation of the belt-based speed-change mechanism 3 inside the transmission box 2 will generate heat, which must be properly removed. To remove the heat or to cool the transmission box 2 and the belt-based speed-change mechanism 3, conventionally, the transmission box 2 is provided, at a front side thereof, with an air inlet 21 through which external air that is at a low temperature is guided into the transmission box to effect cooling of the transmission box.

To effectively cool the transmission box 2 with the low-temperature external air, the drive disk 33 is provided with a plurality of vane blades 331, which makes the drive disk 33 functioning like a cooling fan. A partition board 23 is arranged opposite to the vane blades 331 and defines an air passage 231 corresponding to the drive disk 33. Thus, the external air that enters the transmission box 2 through the air inlet 21 is guided by the partition board 23 and drawn through the air passage 231 by the drive disk 33 to effect cooling of the transmission box 2.

However, the air passage 231 of the partition board 23 of the conventional design is not configured to effectively guide air flow toward the drive disk 33 and the air that passes through the air passage 231 of the partition board 23 is randomly distributed. This affects the flow of air and thus decreases the cooling effect.

US 2003/0066696 discloses the features of the preamble of claim 1.

Thus, the present invention is aimed to provide a cooling mechanism that overcomes the drawbacks of the conventional design to provide enhanced cooling to a transmission box of a motorcycle engine.

### SUMMARY OF THE INVENTION

The primary purpose of the present invention is to provide a cooling mechanism for a belt-based speed-change system of a motorcycle engine, which has enhanced cooling performance for cooling a transmission box of the belt-based speed-change system of the motorcycle engine.

To achieve the above objective, according to the present invention, a cooling mechanism for a belt-based speed-change system of a motorcycle engine comprises an air guide chamber formed inside a transmission box of the engine and defining an air collection chamber communicating with an air inlet of the transmission box. A wet-type clutch arranged between the engine and the belt-based speed-change system has a clutch cover mounted to and covering the air guide chamber and defining openings in communication with the air collection chamber. An air guide lid is arranged between the belt-based speed-change system and the clutch cover, and forms an air intake opening corresponding in position to a drive disk of the belt-based speed-change system. The cooling mechanism allows external air entering the transmission box to be effectively and efficiently guided through the transmission box and expelled through an air outlet of the transmission box for cooling the belt-based speed-change system with enhanced performance.

The foregoing object and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

Figure 1 is a cross-sectional view of a conventional motorcycle engine;
Figure 2 is a cross-sectional view of a motorcycle engine in which a cooling mechanism embodying the present invention is incorporated;
Figure 3 is an exploded view of the motorcycle engine showing the cooling mechanism of the present invention;
Figure 4 is a perspective view of a portion of the motorcycle engine in exploded form to illustrate the cooling mechanism of the present invention; and
Figure 5 is a perspective view of an air guide cover of the cooling mechanism in accordance with the present invention.

### DETAILED DESCRIPTION OF THE PREFERRED EMBODIMENTS

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

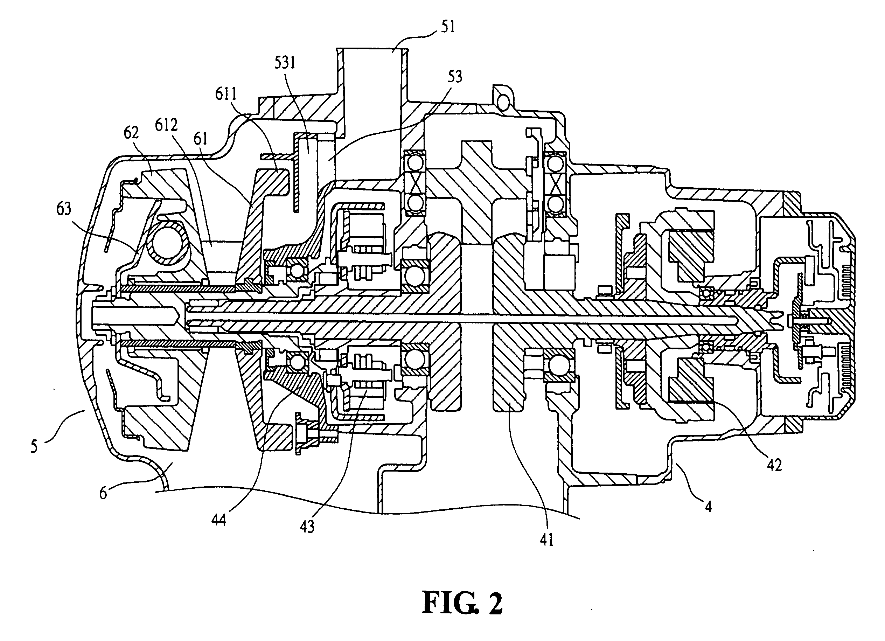

With reference to the drawings and in particular to Figure 2, a motorcycle engine, which is designated with reference numeral 4, comprises a crankshaft 41 for output of power. The crankshaft 41 has an end coupled to a generator 42 and an opposite end extending into a transmission box 5 and coupled to a drive disk 61, a slide disk 62, and a constraint board 63 of a belt-based speed-change system 6. A wet-type clutch 43 is arranged at one side of the drive disk 61 of the belt-based speed-change system 6 and the wet-type clutch 43 is separated from the belt-based speed-change system 6 by a clutch cover 44.

The drive disk 61 is driven to rotate by the engine 4, as well as the clutch 43, and the rotation of the drive disk 61 is imparted to a V belt 612 that is interposed between the drive disk 61 and the slide disk 62 and is in driving engagement with the drive disk 61. The belt 612 in turn drives a driven pulley (not shown) engaging an opposite end of the belt 612 for transmission of power to a rear wheel and thus a front wheel of the motorcycle.

The drive disk 61 forms on an outer surface axially distant from the slide disk 62 a plurality of vane blades 611, making the drive disk 61 also function as a cooling fan. The transmission box 5 forms, at a front side thereof, an air inlet 51 through which external air that is at low temperature is allowed to enter the transmission box 5 and is driven by the vane blades 611 of the drive disk 61 to circulate through the transmission box 5 for cooling purposes. The air, after cooling the transmission box 5 and the belt-based speed-change system 6 and thus heated to a higher temperature, is expelled out of the transmission box 5 through an air outlet 52 formed on a rear side of the transmission box 5.

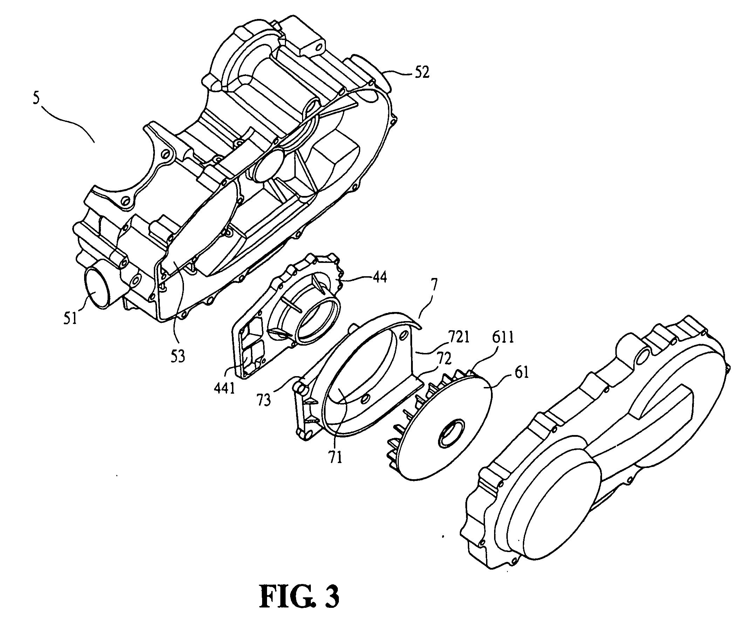

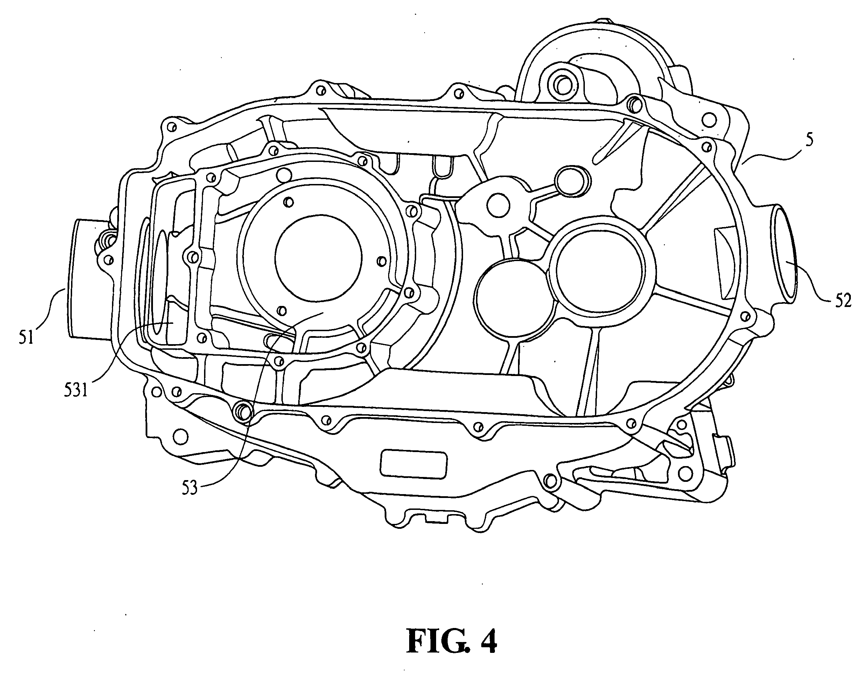

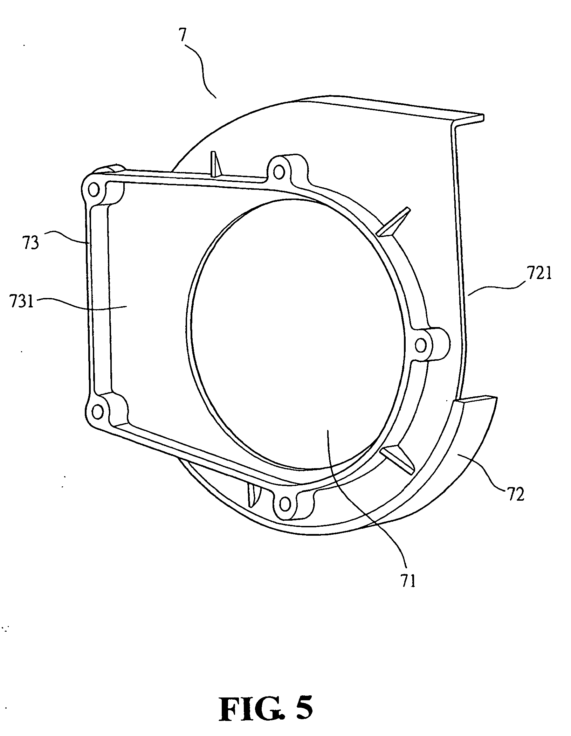

Also referring to Figures 3, 4, and 5, the transmission box 5 form therein an air guide chamber 53 adjacent to and communicating with the air inlet 51. An air collection chamber 531 is also defined in the transmission box 5 and is arranged and communicating between the air inlet 51 and the air guide chamber 53. The clutch cover 44 is mounted to and covers the air guide chamber 53 and the air collection chamber 531 with two openings 441 defined in the clutch cover 44 communicating the air collection chamber 531.

Preferably, the openings 441 are arranged in an up-and-down line-up and spaced manner.

An air guide lid 7 is arranged between the clutch cover 44 and the drive disk 61. The air guide lid 7 defines an air intake opening 71 corresponding in position to the vane blades 611. The air guide lid 7 forms, on one surface thereof, a flange 72 partially surrounding the air intake opening 71 with a cutoff 721 serving as an air discharge opening 721. The flange 72 extends circumferentially around the vane blades 611 and thus forms an airflow guide means, which guide airflow induced by the vane blades 611 through the air intake opening 71 to the air discharge opening 721.

The air guide lid 7 also forms, on an opposite surface thereof, a second flange 73 corresponding in position to and surrounding the openings 441 of the clutch cover 44. Inboard the second flange 73, the air guide lid 7 forms a barrier face 731 confronting the openings 441 of the clutch cover 44. Thus, air entering the transmission box 5 and flowing through the openings 441 of the clutch cover 44 is guided by the second flange 73 and the barrier face 731 of the air guide lid 7 toward and through the air intake opening 71 and is further driven by the vane blades 661 toward the air discharge opening 721 by being guided by the first flange 72.

The operation of the cooling mechanism of the present invention will be further discussed. Low-temperature external air enters the transmission box 5 through the air inlet 51 and is collected in the air collection chamber 531 and then guided through the openings 441 of the clutch cover 44 into the space defined in the second flange 73 of the air guide lid 7 and further guided by the second flange 73 and the barrier face 731 to concentrate toward the air intake opening 71. When the drive disk 61 is caused by the crankshaft 41 to rotate, the vane blades 611 that rotate in unison with the drive disk 61 force the air to further move into the transmission box 5 and is further guided constrained by the first flange 72 of the air guide lid 7 to remain close to the drive disk 61 to allow the vane blades 661 to induce airflow circulating further into the transmission box 5 for removing heat from and thus cooling the belt-based speed-change system 6.

The air that takes heat from the belt-based speed-change system 6 moves toward the air outlet 52 and then exits the transmission box 5 through the air outlet 52.

In accordance with the present invention, the air guide chamber 53 formed inside the transmission box 5 cooperates with the clutch cover 44 and the air guide lid 7 to form air guide means that properly draw external air into the transmission box 5 and circulate the air through the belt-based speed-change system 6 by the rotation of the drive disk 61 to effect cooling of the belt-based speed-change system 6 without the drawbacks occurring in the conventional designs and thus enhancing the cooling effect of the transmission system.

It will be understood that each of the elements described above, or two or more together may also find a useful application in other types of methods differing from the type described above.

## Claims

1. A cooling mechanism adapted to cool a belt-based speed-change system (6) of an engine (4), wherein the engine (4) has a crankshaft (41) for output of power, the crankshaft (41) having an end coupled to a generator (42) and an opposite end extending into a transmission box (5) and coupled to the belt-based speed-change system (6), and a wet-type clutch (43) arranged between the belt-based speed-change system (6) and the engine (4), the wet-type clutch (43) having a clutch cover (44) separating the clutch (43) from the belt-based speed-change system (6), the cooling mechanism : comprising
an air inlet (51) defined in the transmission box (5);
an air guide chamber (53) formed inside the transmission box (5) and defining an air collection chamber (531) communicating with the air inlet (51), the clutch cover (44) being mounted to and covering the air guide chamber (53) and defining at least one opening in communication with the air collection chamber (531); and
an air guide lid (7) arranged between the belt-based speed-change system (6) and the clutch cover (44), **characterized in that** the air guide lid (7) forms an air intake opening (71) corresponding in position to a drive disk (61) of the belt-based speed-change system (6), the air guide lid (7) having a surface opposing the belt-based speed-change system (6) and forms a flange (72) on the surface.

2. The cooling mechanism as claimed in Claim **1**, wherein the flange (72) partially circumferentially extends around the drive disk (61) and forms a cutoff, serving as an air discharge opening (721).

3. The cooling mechanism as claimed in Claim **1**, wherein the air guide as lid (7) has a surface opposing the clutch cover (44) and forms a second flange (73) on the surface.

4. The cooling mechanism as claimed in Claim **3**, wherein the flange (73) surrounds the opening (441) of the clutch cover (44) and wherein the air guide lid (7) forms a barrier face (731) within the flange (73) and confronting the opening (441) of the clutch cover (44).

5. The cooling mechanism as claimed in Claim **1**, wherein the clutch cover (44) forms two openings (441) forming an up-and-down spaced arrangement.

## Patentansprüche

1. Eine Kühlvorrichtung für einen Riemenantrieb (6) mit variabler Übersetzung für einen Verbrennungsmotor (4) mit einer Kurbelwelle (41), an deren einem Ende ein Generator (42) angebracht ist und deren anderes Ende in ein Getriebegehäuse (5) geht, wo es über eine hydraulische Kupplung (43) mit einem Riemenantrieb (6) mit variabler Untersetzung gekoppelt ist, wobei die hydraulische Kupplung (43) durch eine Kupplungsabdeckung (44) von dem Riemenantrieb (6) mit variabler Übersetzung getrennt ist und die
einen im Getriebegehäuse (5) definierten Lufteinlaß (51) und
eine Luftleitkammer (53) innerhalb des Getriebegehäuses (5) hat,
wobei eine Luftsammelkammer (531) entsteht, die mit dem Lufteinlaß (51) kommuniziert und wobei die Kupplungsabdeckung (44) an der Luftleitkammer (53) befestigt ist und diese abdeckt und mindestens eine Öffnung zur Luftsammelkammer (531) hat, sowie
ein Luftleitblech (7) zwischen dem Riemenantrieb (6) mit variabler Übersetzung und der Kupplungsabdeckung (44), **dadurch gekennzeichnet, daß** das Luftleitblech (7) eine Lufteinlaßöffnung (71) bildet, deren Lage mit der einer Antriebsscheibe (61) des Riemenantriebs (6) mit variabler Übersetzung korrespondiert, wobei das Luftleitblech (7) eine dem Riemenantrieb (6) mit variabler Übersetzung gegenüberliegende Oberfläche hat, auf der ein Flansch (72) ausgebildet ist.

2. Die Kühlvorrichtung für einen Riemenantrieb (6) mit variabler Übersetzung aus Anspruch 1, bei der Flansch (72) die Antriebsscheibe (61) teilweise umfängt und einen Ausschnitt hat, der als Luftauslaßöffnung (721) dient.

3. Die Kühlvorrichtung für einen Riemenantrieb (6) mit variabler Übersetzung aus Anspruch 1, bei der das Luftleitblech (7) mit einer Oberfläche der Kupplungsabdeckung (44) gegenüberliegt und auf dieser Oberfläche einen zweiten Flansch (73) bildet.

4. Die Kühlvorrichtung für einen Riemenantrieb (6) mit variabler Übersetzung aus Anspruch 3, bei der der zweite Flansch (73) eine Öffnung (411) der Kupplungsabdeckung (44) umgibt und bei der das Luftleitblech (7) eine Trennfläche (731) innerhalb des Flansches (73) bildet, die der Öffnung (441) der Kupplungsabdeckung (44) gegenüberliegt.

5. Die Kühlvorrichtung für einen Riemenantrieb (6) mit variabler Übersetzung aus Anspruch 1, bei der die Kupplungsabdeckung (44) zwei übereinander angeordnete Öffnungen (441) hat.

## Revendications

1. Mécanisme de refroidissement adapté pour refroidir un système de changement de vitesses sur ceinture (6) d'un moteur (4), où le moteur (4) possède un vilebrequin (41) pour la puissance de sortie, ce vilebrequin (41) ayant une extrémité couplée à un générateur (42) et une extrêrnité opposée s'étendant dans un boîtier de transmission (5) et couplée au système de changement de vitesses sur ceinture (6) et un embrayage de type humide (43) positionné entre le système de changement de vitesses sur ceinture (6) et le moteur (4), cet embrayage de type humide (43) ayant un couvercle d'embrayage (44) séparant l'embrayage (43) du système de changement de vitesses sur ceinture (6), le mécanisme de refroidissement comprenant:
- Une entrée d'air (51) définie dans le boîtier de transmission (5);
- Une chambre de guide à air (53) formée à l'intérieur du boîtier de transmission (5) et définissant un chambre de rassemblement d'air (531) communiquant avec l'entrée d'air (51), le couvercle d'embrayage (44) y étant assemblé et recouvrant la chambre de guide à air (53) et définissant au moins une ouverture avec la chambre de rassemblement d'air (531) et
- Un couvercle de guide à air (7) positionné entre le système à changement de vitesses sur ceinture (6) et le couvercle d'embrayage (44), **caractérisé en ce que** le couvercle de guide à air (7) forme une ouverture à entrée d'air (71) correspondant en position à un disque moteur (61) du système à changement de vitesses sur ceinture (6) et forme aussi un boudin (72) sur la surface.

2. Mécanisme de refroidissement comme indiqué dans la Revendication 1, où le boudin (72) s'étend partiellement autour du disque moteur (61) et forme une coupure, servant comme ouverture à décharge d'air (721).

3. Mécanisme de refroidissement comme indiqué dans la Revendication 1, où le couvercle de guide à air (7) a une surface opposée au couvercle d'embrayage (44) et forme un second boudin (73) sur la surface.

4. Mécanisme de refroidissement comme indiqué dans la Revendication 3, où le boudin (73) environne l'ouverture (441) du couvercle d'embrayage (44) et où le couvercle de guide à air (7) forme un côté barrière (731) dans le boudin (73) et faisant face à l'ouverture (441) du couvercle d'embrayage (44).

5. Mécanisme de refroidissement comme indiqué dans la Revendication 1, où le couvercle d'embrayage (44) forme deux ouvertures (441) avec une disposition espacée verticalement.
